# DEMANDE DE BREVET EUROPEEN

(11) **EP 1 586 234 A2**
(43) Date de publication de la demande: **19.10.2005**
(21) Numéro de dépôt: 05290755.7
(22) Date de dépôt: 04.04.2005
(51) Int. Cl.: A01G 13/02

(54) **Machine à ramasser les filets**

(30) Priorité: 06.04.2004 FR 0403672
(71) Demandeur: Guedon, Michel, 23200 Moutier-Rozeille (FR)
(72) Inventeur: Guedon, Michel, 23200 Moutier-Rozeille (FR)

(57) **Abrégé**

Machine pour ramasser, rassembler les filets de protection étendus sur les arbres fruitiers et agrumes.

La machine est constituée de plusieurs parties.

La pièce (1) est un tube usiné pour recevoir la pièce (7) démontable rapidement qui sert de passage au cable (1) du filet (10).

La pièce (1) est soudée sur la pièce (8) elle-même fixée sur un tracteur ou engin de travaux publics.

Pour l'avancement du système, la rotation de la piéce (2) se fait autour de la pièce (1) par l'intermédiaire de 16 roulements (6).

La pièce (2) supporte les boîtiers (11) qui reçoivent les pelotes de ficelle (15) qui enroulent en boudin (16) le filet (10) sur le fil (9).

La pièce (2) est entrainée par le moteur hydraulique (4). La rotation est transmise par la couronne (5) qui a une ouverture rapide (12).

A l'avant de la pièce (1) est soudé ou boulonné un cône en demi-entonnoir (3) qui ramasse et rassemble le filet (10).

## Description

L'invention présentée ci-après est une machine pour ramasser, rassembler en boudins, enrouler par deux ficelles, un filet sur un cable acier tendu entre des poteaux plantés dans la terre dans le sens de la rangée des arbres.

Ce filet posé sur le fil acier couvre des arbres fruitiers,agrumes pour les protéger des oiseaux ainsi que de la grêle.

La saison de ramassage des fruits, agrumes terminée , il est indispensable que ces filets soient rassemblés en boudins, ficelès sur le fil acier qui sert de support pour protéger les filets pendant l'hiver des intempéries (tempête, neige, givre).

Actuellement ces filets sont rassemblés manuellement, ce qui est très long et peu pratique.

La machine présentée permet un ramassage rapide et fiable.

Son utilisation est relativement facile d'emploi. La machine est fixée sur un support, transportée par un tracteur ou un engin de travaux publics qui roule entre les rangées d'arbres fruitiers.

L'installation de la machine se fait en bout des rangs sans démontage du filet et du cable acier.

Des ouvertures sont prévues , plaque numéro 7, sur la pièce numéro 1, fixées par des vis (17) segment numéro 12 sur le pignon numéro 5, ce qui permet le passage du cable acier numéro 9 ainsi que le filet numéro 10.

La machine se compose de quatre parties principales : les piéces numéro un et numéro huit.

La pièce numéro 8 soudée sur la numéro 1 sert pour la fixation de la machine sur le support du tracteur ou engin travaux agricoles, indispensable pour le fonctionnement de la machine.

La piéce numéro 1 est un tube usiné au tour et à la fraiseuse pour recevoir en premier la pièce numéro 7, démontable, qui sert de passage du cable (9) et du filet (10) à l'intérieur de la machine.

L'usinage de deux rainures circulaires dans la pièce (1) servent de bandes de roulement pour permettre la rotation de la pièce (2) par seize roulements (6) fixés par les vis (13).

En bout avant de la pièce (1) est soudé ou boulonné le cône (3) en forme de demi-entonnoir. L'entrée du cône est de forme arrondie pour éviter de déchirer le filet.

Le cône (3) permet de ramasser, rassembler le filet (10) sur le fil acier (9).

Le filet (10) sort en boudin (16) autour du fil acier (9) à l'arrière du tube (1).

La pièce (2) est entrainée par un moteur hydraulique (4).

Sur la pièce (2) est fixée une couronne dentée (5) qui engrenne sur le pignon du moteur (4).

La pièce (2) a une ouverture permanente (14) usinée pour le passage du fil acier (9) et du filet (10) .

La pièce (2) sert de support aux boitiers (11) qui sont eux-mêmes support de pelotes de ficelles (15).

Les ficelles (15) sont attachées , ligaturées en bout de rang autour du filet (10) et du cable acier (9). Le réglage de la tension des ficelles se fait par les deux plaques (18) serrées par une vis et un ressort.

La machine est prête à fonctionner.

Le tracteur ou engin de travaux publics avance.

De l'intérieur de l'engin, le chauffeur met en route le moteur (4) par l'intermédiaire d'un régulateur, distributeur de débit d'huile fixé dans la cabine.

Suivant le serrage et desserrage de la vis de réglage du régulateur, on augmente ou diminue la vitesse de rotation du moteur hydraulique, ce dernier entrainant la pièce (2).

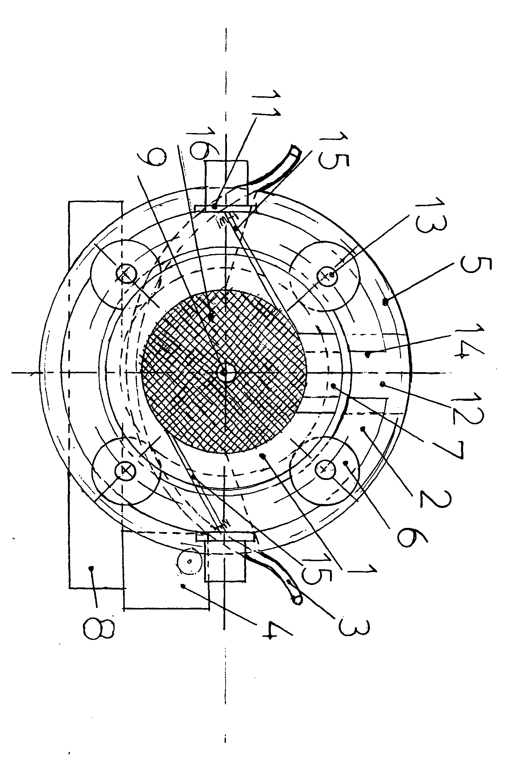

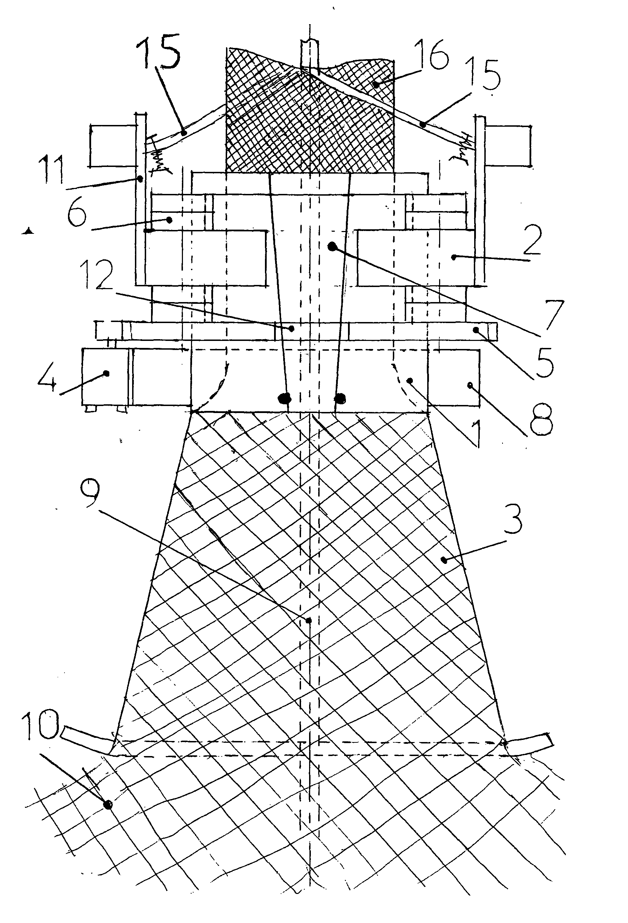

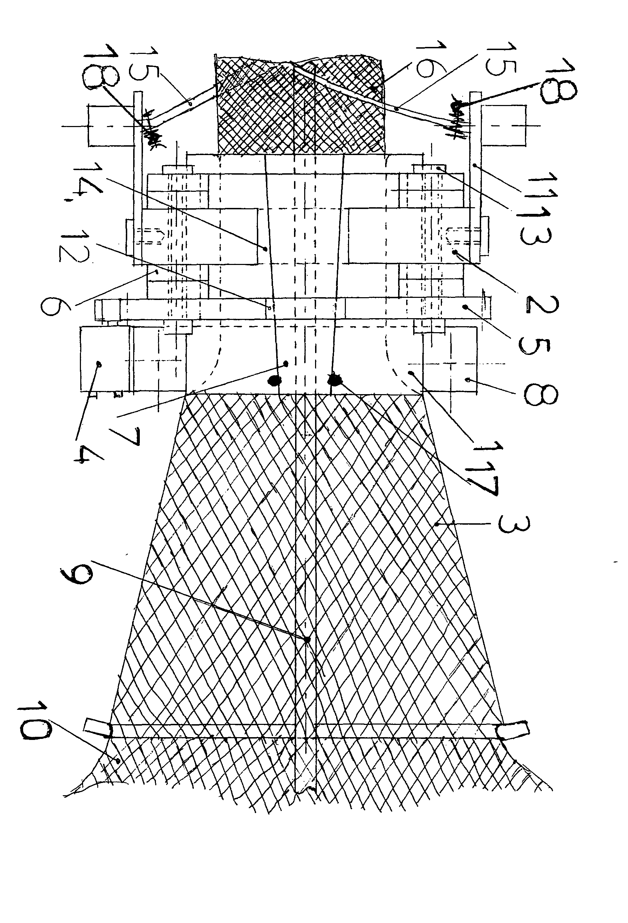

## Revendications

1. Machine pour ramasser, rassembler, ficeler en boudins sur un fil acier les filets qui protégent les arbres fruitiers, agrumes des intempéries **caractérisée en ce qu'**elle se compose d'une pièce maîtresse le tube (1) et d'un support (8) pour la fixation de la machine sur un tracteur ou engin de manutention et par une ouverture (7) correspondant à une pièce démontable sur le tube (1), une ouverture permanente (14) sur la pièce (2) une ouverture 5 correspondant à un segment démontable (12) sur la couronne (5) pour le passage et l'installation du fil (9) du filet (10) en bout des rangées.

2. Machine selon la revendication 1 **caractérisée par** l'usinage sur le tube (1) de deux rainures circulaires qui servent de piste de roulement d'une pièce (2) qui reçoit deux supports de bobine de ficelle (11) fixé ou soudé sur la pièce (2).

3. Machine selon la revendication 2 **caractérisée par** le perçage, taraudage dans la pièce (2) de huit trous pour recevoir seize roulements (6) fixés par des vis (13), qui servent à la rotation autour du tube (1).

4. Machine selon la revendication 2 ou 3 **caractérisée par** la fixation d'une couronne dentée (5) sur la pièce (2), qui sert pour l'entraînement en rotation.

5. Machine suivant la revendication 4 **caractérisée par** un moteur hydraulique (4) dont le pignon engrène sur la couronne (5).

6. Machine suivant la revendication 5 **caractérisée par** l'alimentation du moteur (4) par une prise hydraulique avec réglage de débit sur un tracteur ou engin de manutention qui sert d'avancement et de rotation de la machine.

7. Machine selon la revendication 1 **caractérisée par** la fixation en bout de tube (1) côté support (8) d'un cône (3) qui sert pour le ramassage, rassemblage du filet (10) canalisé dans le tube (1).

8. Machine suivant la revendication 2 **caractérisée par** un frein de ficelle (18) pour plus ou moins de serrage sur le boudin en sortie de tube (1).
